(19) Europäisches Patentamt
European Patent Office
Office européen des brevets

(11) **EP 4 598 177 A1**

(12) **EUROPEAN PATENT APPLICATION**
published in accordance with Art. 153(4) EPC

(43) Date of publication:
**06.08.2025 Bulletin 2025/32**

(21) Application number: **22960362.6**

(22) Date of filing: **30.09.2022**

(51) International Patent Classification (IPC):
***H04W 72/04*** (2023.01)

(52) Cooperative Patent Classification (CPC):
**H04W 8/08; H04W 8/24; H04W 72/04**

(86) International application number:
**PCT/CN2022/123454**

(87) International publication number:
**WO 2024/065748 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventors:
• LIU, Min
  **Beijing 100085 (CN)**
• ZHU, Yajun
  **Beijing 100085 (CN)**

(74) Representative: **Dehns Germany Partnerschaft
mbB
Theresienstraße 6-8
80333 München (DE)**

(54) **CAPABILITY INFORMATION REPORTING METHOD AND APPARATUS, DEVICE, AND
STORAGE MEDIUM**

(57)    The present application relates to the field of mobile communications, and discloses a capability information reporting method and apparatus, a device, and a storage medium. The method comprises: reporting capability information, wherein the capability information is used for indicating the capability of joint channel esti- mation for uplink channels in an NTN. The capability of joint channel estimation for the uplink channels in the NTN is reported by a terminal, so that uplink joint channel estimation in an NTN system can be implemented, and the uplink channel coverage in the NTN system is im- proved.

302

Reporting capability information which indicates capability of joint
channel estimation for uplink channel in NTN

FIG. 3

EP 4 598 177 A1

Description

TECHNICAL FIELD

The present disclosure relates to the field of mobile communications, and in particular, to a method and device for reporting capability information, an apparatus and a storage medium.

BACKGROUND

In non-terrestrial network (NTN) systems, as the distance between a satellite (base station) and a terrestrial terminal is long, the path loss of transmission is large, which may lead to limited coverages of some uplink channels.

SUMMARY

Embodiments of the present disclosure provide a method and device for reporting capability information, an apparatus and a storage medium. The technical solutions are as follows:

An aspect of the present disclosure provides a method for reporting capability information performed by a terminal, including:

reporting the capability information, the capability information indicating a capability of joint channel estimation for an uplink channel in NTN.

Another aspect of the present disclosure provides a method for reporting capability information performed by a network device, including:

receiving the capability information reported by a terminal, the capability information indicating a capability of joint channel estimation for an uplink channel in NTN.

Another aspect of the present disclosure provides a device for reporting capability information, including:

a transmitting module, configured to report the capability information, the capability information indicating a capability of joint channel estimation for an uplink channel in NTN.

Another aspect of the present disclosure provides a device for reporting capability information, including:

a receiving module, configured to receive the capability information reported by a terminal, the capability information indicating a capability of joint channel estimation for an uplink channel in NTN.

Another aspect of the present disclosure provides a terminal, including: a processor; a transceiver connected to the processor; and a memory having executable instructions of the processor stored thereon, wherein the processor is configured to load and execute the executable instructions to implement the method for reporting capability information according to the above aspect.

Another aspect of the present disclosure provides a network device, including: a processor; a transceiver connected to the processor; and a memory having executable instructions of the processor stored thereon, wherein the processor is configured to load and execute the executable instructions to implement the method for reporting capability information according to the above aspect.

Another aspect of the present disclosure provides a computer-readable storage medium having executable instructions stored thereon that, when being loaded and executed by a processor, implement the method for reporting capability information according to the above aspect.

Another aspect of the present disclosure provides a chip including a programmable logic circuit or program, and the chip is configured to implement the method for reporting capability information according to the above aspect when being run on a computing device.

Another aspect of the present disclosure provides a computer program product or computer program, the computer program product or computer program includes computer instructions that stored in a computer-readable storage medium, and a processor reads the computer instructions from the computer-readable storage medium and executes the same, so that a computing device executes the method for reporting capability information according to the above aspect.

The technical solution provided by the present disclosure includes at least the following beneficial effects.

By reporting, by the terminal, the capability of joint channel estimation for the uplink channel in the NTN, the uplink joint channel estimation in the NTN system may be achieved and the uplink channel coverage in the NTN system may be improved.

BRIEF DESCRIPTION OF THE DRAWINGS

In order to more clearly illustrate the technical solutions in the embodiments of the present disclosure, the accompanying drawings to be used in the description of the embodiments will be briefly described below. Obviously, the accompanying drawings in the following description are only some of the embodiments of the present disclosure, and a person skilled in the art may obtain other accompanying drawings on the basis of these drawings without creative labor.

FIG. 1 is a schematic diagram of a transparent payload-based NTN scenario according to an exemplary embodiment of the present disclosure;

FIG. 2 is a schematic diagram of a regenerative payload-based NTN scenario according to an exemplary embodiment of the present disclosure;

FIG. 3 is a flowchart of a method for reporting capability information according to an exemplary embodiment of the present disclosure;

FIG. 4 is a flowchart of a method for reporting capability information according to an exemplary embodiment of the present disclosure;

FIG. 5 is a flowchart of a method for reporting capability information according to an exemplary embodiment of the present disclosure;

FIG. 6 is a structural block diagram of a device for reporting capability information according to an exemplary embodiment of the present disclosure;

FIG. 7 is a structural block diagram of a device for reporting capability information according to an exemplary embodiment of the present disclosure; and

FIG. 8 is a schematic diagram of a structure of a communication device according to an exemplary embodiment of the present disclosure.

## DETAILED DESCRIPTION

In order to make the object, technical solution and advantage of the present disclosure clearer, an implementation of the present disclosure will be described in further detail below in connection with the accompanying drawings.

Exemplary embodiments will be described herein in detail, examples of which are represented in the accompanying drawings. When the following description relates to the accompanying drawings, the same reference numerals in different accompanying drawings indicate the same or similar elements unless indicated otherwise. The implementations described in the following exemplary embodiments do not represent all the implementations consistent with the present disclosure. Rather, they are only examples of devices and methods consistent with some aspects of the present disclosure as detailed in the appended claims.

The terms used in the present disclosure are used solely for describing particular embodiments and are not intended to limit the present disclosure. The singular forms of "a", "an", "said", and "the" used in the present disclosure and the appended claims are also intended to include a plural form unless indicated otherwise. It is to be also understood that the term "and/or" as used herein refers to and include any or all possible combinations of one or more of the associated listed items.

It is to be understood that although the terms first, second, third, etc. may be used in the present disclosure to describe various information, such information should not be limited by these terms. These terms are used only to distinguish the same type of information from one another. For example, without departing from the scope of the present disclosure, first information may be referred to as second information, and similarly, second information may also be referred to as first information. Depending on the context, for example, the word "if" as used herein may be interpreted as "at the time of ......" or "when ......" or "in response to determining".

### Introduction of NTN system

Currently, the third generation partnership project (3GPP) is working on NTN technology. Unlike a traditional terrestrial network (TN) system, an NTN system uses a satellite and a high altitude platform station (HAPS) in network deployment. Taking satellite communication as an example, theoretically only a few satellites may achieve global coverage except for the polar areas of the earth. Compared with the TN system, the NTN system has significant coverage advantages. The typical application scenarios of the NTN system include a situation where it is impossible to build a base station and the base station is damaged, for example, continuous coverage in remote mountainous areas, deserts, oceans and forests, or emergency communication in the event of a disaster or base station damage. The typical scenarios of the NTN system may be summarized as follows: all-terrain coverage, signaling offload, emergency communication, the Internet of Things, and broadcasting service.

The NTN system may include a satellite system. According to the satellite altitude, i.e., the satellite orbit altitude, the satellite system may be divided into a high elliptical orbit (HEO) satellite, a geostationary earth orbit (GEO) satellite, a medium-earth orbit (MEO) satellite, and a low-earth orbit (LEO) satellite. In addition, the NTN system may also include an airborne network device such as a high altitude platform station (HAPS) communication system, and the network device involved in the present disclosure is not limited to the above examples.

LEO satellite: A LEO satellite may be referred to as a non-geostationary satellite, and there are many types of non-geostationary satellites. Taking the LEO satellite as an example, the LEO satellite moves faster relative to the ground, about 7Km/s, so the coverage area of the service provided by the LEO satellite also moves with the LEO satellite. The LEO satellite has a short signal propagation distance and a small path loss, which does not have a high requirement for the transmission power of the user terminal.

GEO satellite: the GEO satellite is also referred to as a geostationary satellite, the movement speed of the GEO satellite is the same as the rotation system of the earth, so the GEO satellite maintains a stationary state relative to the ground. Correspondingly, the cell of the GEO satellite is also stationary, and has a large coverage area, which generally has a cell diameter of 500km.

In order to ensure the coverage of the communication satellite and enhance the system capacity of the whole satellite communication system, the communication satellite uses multi-beam to cover the ground. One communication satellite may form dozens or even hundreds of beams to cover the ground, and one satellite beam may cover the ground area with a diameter of dozens to hundreds of kilometers.

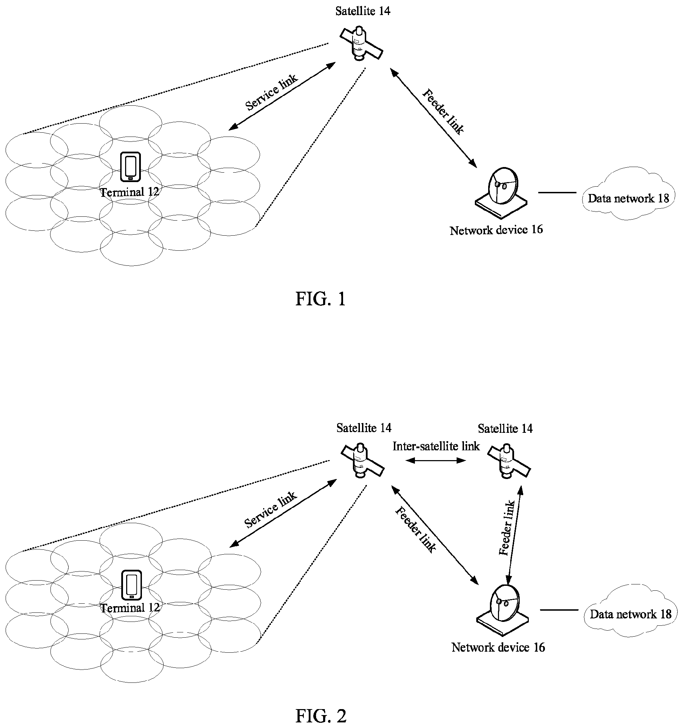

Currently, the 3GPP takes two types of satellites into account, namely: a satellite with transparent payload, and a satellite with regenerative payload. FIG. 1 illustrates a schematic diagram of a transparent payload-based NTN scenario and FIG. 2 illustrates a schematic diagram of a regenerative payload-based NTN scenario.

The NTN network includes the following network elements:

- one or more network devices 16: connecting a satellite 14 to a data network 18 on the ground;
- feeder link: a link for communication between the network device 16 and the satellite 14;
- service link: a link for communication between a user terminal 12 and the satellite 14;
- satellite 14: which may be divided into two types, namely, transparent payload and regenerative payload according to the function it provides;
- transparent payload: only providing functions of radio frequency filtering, frequency conversion and amplification, and only providing transparent forwarding of signals without changing the waveform signals it forwards; and
- regenerative payload: providing functions of demodulation/decoding, routing/conversion and coding/modulation in addition to the functions of radio frequency filtering, frequency conversion and amplification, which has some or all of the functions of a base station; and
- inter-satellite link (ISL): existing in the NTN scenario with regenerative payload.

It is to be noted that the terminal in the embodiment of the present disclosure may refer to a user equipment (UE), an access terminal, a user unit, a user station, a mobile station, a mobile, a remote station, a remote terminal, a mobile apparatus, a wireless communication device, a user agent or a user device. Optionally, the terminal may also be a cellular telephone, a cordless telephone, a session initiation protocol (SIP) telephone, a wireless local loop (WLL) station, a personal digita1 assistant (PDA), a handheld device having a wireless communication function, a computing device or an other processing device connected to a wireless modem, an in-vehicle device, a wearable device, a terminal in the 5th generation system (5GS) or a future evolved public land mobile network (PLMN), or the like, which is not limited in the embodiment of the present disclosure.

The access network device in the embodiment of the present disclosure is a device deployed in an access network to provide a wireless communication function for a terminal. The access network device may include various forms of macro base stations, micro base stations, relay stations, access points, and the like. In systems using different wireless access technologies, the name of the device having the function of the access network device may be different, for example, in the 5G NR system, it is called a gNodeB or a gNB. The name of the "access network device" may change as the communication technology evolves. For convenience of description, in the embodiment of the present disclosure, the above-mentioned devices that provide the wireless communication function for the terminal are collectively referred to as the access network device. Optionally, a communication may be established between the terminal and the core network device through the access network device. For example, in the long term evolution (LTE) system, the access network device may be one or more of evolved universal terrestrial radio access network (EUTRAN) or one or more eNodeBs in the EUTRAN; and in the 5G NR system, the access network device may be a RAN or one or more gNBs in the RAN.

The function of the core network device is mainly to provide user connectivity, manage users, and bear services, and to serve as a bearer network to provide an interface to an external network. For example, the core network device in the 5G NR system may include an access and mobility management function (AMF) entity, a user plane function (UPF) entity, a session management function (SMF) entity, a location management function (LMF) entity or the like. The access network device and the core network device may be collectively referred to as a network device.

In the NTN system, as the distance between a satellite (base station) and a terrestrial terminal is long, the path loss of transmission is large, which may lead to limited coverages of some uplink channels.

**Introduction of joint channel estimation**

The channel coverage may be improved by means of joint channel estimation. The joint channel estimation may include demodulation reference signal (DMRS) bundling, which specifically means that a receiving end (base station) performs joint demodulation on a plurality of uplink channels (e.g., physical uplink shared channels) transmitted repeatedly (repetition) by a transmitting end (terminal) by using the DMRS of the plurality of uplink channels, so that the accuracy of channel estimation may be improved, and thus the coverage of the uplink channel may be be improved.

The precondition for the use of DMRS bundling is that the terminal can guarantee power consistency and phase continuity (also referred to as phase consistency) during an uplink transmission time duration. According to the definition of existing standards, the phase continuity requirement is satisfied when the terminal has a phase difference of no more than 25 degrees or 30 degrees between two slots. For example, Table 1 illustrates a maximum allowable phase difference for DMRS bundling.

Table 1

| UpLink channel | Modulation order | Phase difference between any slot p-1 and slot p (Note 2) | Phase difference between slot 0 and any slot p (Note 3) |
|---|---|---|---|
| PUSCH | Pi/2 BPSK, QPSK | [25] degrees | [30] degrees |
| PUSCH | Pi/2 BPSK, BPSK, QPSK | | |

Note 1: The UE capability of the length of maximum duration refers to the maximum time duration during which UE is able to meet the phase continuity requirements, assuming no phase consistency violating events defined in TS 38.214 in between.
Note 2: This requirement applies for FDD and TDD bands, for supported DMRS bundling configurations≤8 slots.
Note 3: This requirement applies only for FDD bands, for supported DMRS bundling configurations of 16 slots.

As for a phase change, in addition to that a phase noise is caused by a device, a phase shift is caused by a relative movement of a transceiver end, which is calculated as follows:

$$Phi=2pi*v*t/lamda=2pi*fd*t$$

where t is a gap between two time points, fd is a Doppler frequency shift, and v is a movement speed.

Based on the above analysis, it can be seen that the relative movement of the transceiver end may cause the phase shift, and in the NTN system, a severe phase shift may be caused by the rapid movement of the satellite.

Taking the sub-carrier space (SCS) = 15KHz as an example, the time interval between adjacent slots is 1ms, and the carrier frequency is 2GHz. When a satellite is right above a terminal, the relative speed thereof is 7.9Km/s, and the phase difference between the adjacent slots is 34 degrees; and when the orbital inclination of the satellite is 30 degrees, the relative speed thereof is 3.85km/s, and the phase difference between adjacent slots is 17 degrees.

It is assumed that the terminal may perform phase compensation when knowing the position thereof and the position of the satellite. However, there is also an error in the satellite position calculated by the terminal, and the faster the speed of the satellite (e.g., when the satellite is right above the terminal), the more difficult the phase compensation is, therefore, the capability of the terminal for maintaining the phase continuity is variable at different elevation angles/moments. At the same time, the terminal is not allowed to make timing advance (TA) adjustments in the process of maintaining power consistency and phase continuity, and in the NTN, a link distance between the terminal and the satellite and that between the satellite and the terrestrial base station are constantly changing due to the movement of the satellite, so the time duration during which the terminal can ensure the phase continuity as well as ensure the TA error within an allowed range of the cyclic prefix (CP) is also affected by other factors, such as an angle between the satellite and the terminal, a common TA parameter broadcast by the base station or the like. Therefore, further discussion and research are needed on the manner of implementing joint channel estimation for an uplink channel in the NTN system.

In the method according to the embodiment of the present disclosure, by reporting, by the terminal, the capability of joint channel estimation for the uplink channel in the NTN, the uplink joint channel estimation in the NTN system may be achieved and the uplink channel coverage in the NTN system may be improved.

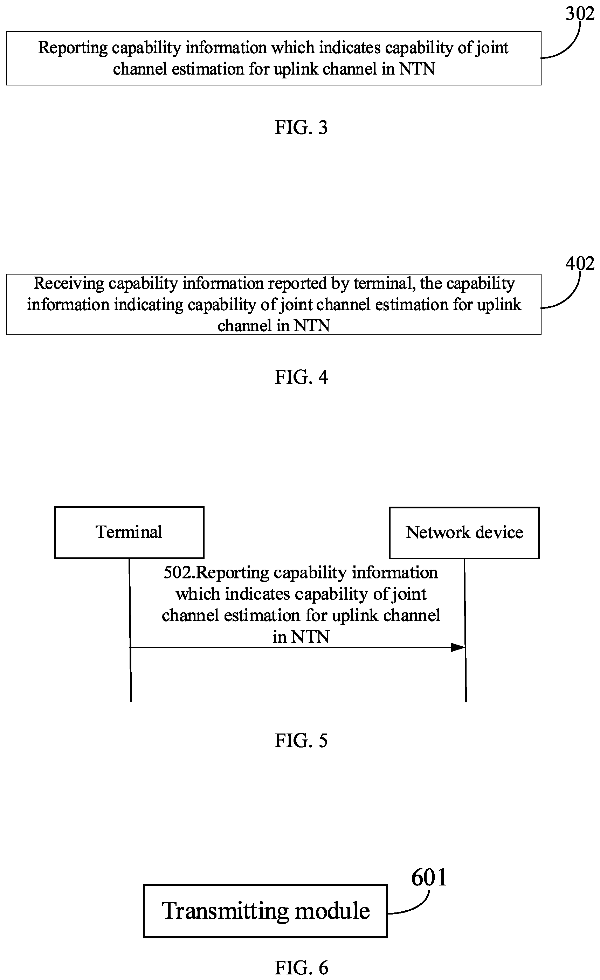

FIG. 3 illustrates a flowchart of a method for reporting capability information according to an embodiment of the present disclosure. The method may be applied in a terminal. The method includes:
step 302, reporting the capability information, the capability information indicating a capability of joint channel estimation for an uplink channel in NTN.

The terminal belongs to an NTN system, and the terminal can report the capability information to a network device in the NTN system. The terminal and the network device in the NTN system may be referred to the examples in FIGS. 1 and 2. The capability of joint channel estimation for the uplink channel in the NTN includes a capability of the terminal for maintaining a power consistency and a phase continuity to support joint channel estimation or DMRS binding for the uplink channel in the NTN. The phase continuity may also be referred to as a phase consistency.

Optionally, the terminal reports the capability information by a combination of one or more of the following manners:

(1) reporting the capability information according to a reporting cycle;
(2) reporting the capability information when the terminal satisfies a reporting condition; or
(3) reporting the capability information when the terminal completes random access and reports a terminal capability.

In the above manner (1), the terminal reports the capability information with a fixed cycle, i.e., the terminal reports the capability information every a certain time period. In the above manner (2), the terminal triggers reporting the capability information under a specific situation, i.e., the terminal reports the capability information only when a pre-agreed situation occurs.

It is to be noted that the above manners can be freely combined or used individually. For example, the terminal may report the capability information according to the reporting cycle, and/or report the capability information when the terminal satisfies the reporting condition. The terminal may also report the capability information when the terminal completes the random access and reports the terminal capability, and/or report the capability information when the terminal satisfies the reporting condition.

Optionally, the capability information reported by the terminal indicates that the terminal maintains the power consistency and/or the phase continuity during one or more time durations. The capability information includes information that can indicate the above one or more time durations, such as bits, code points, specific time duration information, or the like, by which the above one or more time durations may be determined. For example, the network device may determine the above one or more time durations based on the information (bits, code points) for indicating the one or more time durations reported by the terminal and predetermined information. The network device may directly determine the above one or more time durations based on the specific time duration information reported by the terminal. In the case where the capability information corresponds to a plurality of time durations, each time duration is the same or different. For example, when the terminal reports the capability information according to the reporting cycle, the capability information reported each time includes the plurality of time durations. When the terminal satisfies the reporting condition, the capability information reported by the terminal includes the plurality of time durations. When the terminal completes the random access and reports the terminal capability, the capability information reported by the terminal includes a plurality of time durations.

Within the time duration during which the terminal can ensure the power consistency and/or the phase continuity, the terminal supports joint channel estimation for the uplink channel in the NTN, for example, supports DMRS bundling. Optionally, the unit of the time duration is a slot, a millisecond, or the like. For example, the capability information reported by the terminal includes a first time duration and a second time duration, the first time duration indicates that the terminal may ensure the phase continuity within 5 slots during a first system frame after the terminal accesses the system, and the first time duration indicates that the terminal may ensure the phase continuity within 10 slots during a second system frame. When there are a plurality of time durations, the capability information may also include an applied time range of each time duration.

Optionally, the reporting condition includes at least one of:

• the terminal obtaining a system information block (SIB)-NTN;
• the terminal obtaining an uplink resource; or
• a global navigation satellite system (GNSS) updating.

The SIB-NTN carries the uplink synchronization auxiliary information, for example, the SIB-NTN refers to SIB#19. Since in some cases, for example, when an implicit uplink synchronization auxiliary information is used to bring into effect a moment indication, the network device may not know when the terminal obtains the SIB-NTN, and thus the network device may not pre-allocate an available uplink resource to the terminal to report the capability information described above, so the terminal may report a request to obtain the uplink resource, i.e., the uplink resource is requested by the terminal from the network device in the NTN. Optionally, the request refers to a scheduling request. Similarly, the network device may not know the GNSS update of the terminal, and the terminal may also report a request to obtain the uplink resource. In order to reduce capability reporting due to frequent GNSS updates, the capability reporting may be triggered when determining that the GNSS change exceeds a certain threshold.

In some cases, for example, when an explicit uplink synchronization auxiliary information is used to bring into effect the moment indication, the network device may know when the terminal obtains the SIB-NTN, and thus the network device may pre-allocate the available uplink resource to the terminal to report the capability information described above. That is, when a predefined situation occurs, the terminal device uses a pre-configured specific resource to report the capability.

Optionally, the uplink synchronization auxiliary information includes at least one of the following:

- satellite ephemeris information; or
- common timing advance (TA) parameter information.

Optionally, the terminal may also report a plurality pieces of capability information when reporting the capability information in the above manner. Further, each piece of the capability information corresponds to one or more time durations. The capability information indicates that the terminal maintains a power consistency and/or a phase continuity during each of the time durations. Optionally, each piece of the capability information includes information that can indicate one or more time durations, such as bits, code points, specific time duration information, or the like, by which the one or more time durations may be determined. For example, the network device may determine the one or more time durations corresponding to each piece of the capability information based on the information (bits, code points) for indicating the one or more time durations in the respective capability information reported by the terminal and predetermined information. The network device may directly determine the one or more time durations corresponding to each piece of the capability information based on the specific time duration information in the respective capability information reported by the terminal. In the case where the capability information corresponds to a plurality of time durations, each time duration is the same or different.

Optionally, the capability information reported by the terminal is reported with respect to the uplink channel. That is, the terminal reports the capability information separately for different uplink channels, and the capability information reported with respect to each uplink channel corresponds to one or more time durations. For example, the terminal reports first capability information and second capability information, the first capability information is reported with respect to a physical uplink shared channel (PUSCH), and the second capability information is reported with respect to a physical uplink control channel (PUCCH).

Optionally, the capability information reported by the terminal is reported with respect to a repeat transmission type of the uplink channel and/or a transmission manner of the uplink channel.

For example, the capability information reported by the terminal is reported with respect to the repeat transmission type of the uplink channel. That is, the terminal reports the capability information separately with respect to different repeat transmission types of the same uplink channel or different repeat transmission types of different uplink channels, and the capability information reported with respect to each repeat transmission type corresponds to one or more durations.

For example, the capability information reported by the terminal is reported with respect to the transmission manner of the uplink channel. That is, the terminal reports the capability information separately with respect to different transmission manners of the same uplink channel or different transmission manners of different uplink channels, and the capability information reported with respect to each transmission manner corresponds to one or more time durations.

For example, the capability information reported by the terminal is reported with respect to the repeat transmission type of the uplink channel and the transmission manner of the uplink channel. That is, for the same uplink channel, the terminal reports the capability information according to the two aspects of the repeat transmission type and the transmission manner. Moreover, the terminal may report the capability information for different uplink channels in the manner described above. Further, for each combination of the repeat transmission type and the transmission manner, the capability information reported by the terminal corresponds to one or more time durations.

For example, the terminal reports first capability information and second capability information, in which the first capability information is reported with respect to PUSCH repetition Type A and the second capability information is reported with respect to PUSCH repetition Type B. Further, the capability information reported by the terminal with respect to each repeat transmission type may include one or more durations.

It is to be noted that the above scheme of different triggering manners for the terminal to report the capability information may be used in combination with the scheme of the terminal reporting the capability information with respect to the uplink channel. For example, the terminal periodically reports the capability information, and the capability information is reported separately with respect to different uplink channels. The terminal reports the capability information when the reporting condition is satisfied, and the capability information is reported with respect to different repeat transmission types of each uplink channel.

In view of the above, in the method provided by the embodiment, by reporting, by the terminal, the capability of joint channel estimation for the uplink channel in the NTN, the uplink joint channel estimation in the NTN system may be achieved, and the uplink channel coverage in the NTN system may be improved.

FIG. 4 illustrates a flowchart of a method for reporting capability information according to an embodiment of the present disclosure. The method may be applied in a network device. The method includes:

step 402, receiving the capability information reported by a terminal, the capability information indicating a capability of joint channel estimation for an uplink channel in NTN.

The terminal belongs to an NTN system, and the terminal can report the capability information to the network device in the NTN system. The terminal and the network device in the NTN system may be referred to the examples in FIGS. 1 and 2. The capability of joint channel estimation for the uplink channel in the NTN includes a capability of the terminal for maintaining a power consistency and a phase continuity to support joint channel estimation or DMRS binding for the uplink channel in the NTN.

Optionally, the capability information reported by the terminal indicates that the terminal maintains the power consistency and/or the phase continuity during one or more time durations. The capability information includes information that can indicate the above one or more time durations, such as bits, code points, specific time duration information, or the like, by which the above one or more time durations may be determined. For example, the network device may determine the above one or more time durations based on the information (bits, code points) for indicating the one or more time durations reported by the terminal and predetermined information. The network device may directly determine the above one or more time durations based on the specific time duration information reported by the terminal. In the case where the capability information corresponds to a plurality of time durations, each time duration is the same or different. For example, when the terminal reports the capability information according to the reporting cycle, the capability information reported each time includes the plurality of time durations. When the terminal satisfies the reporting condition, the capability information reported by the terminal includes the plurality of time durations. When the terminal completes the random access and reports the terminal capability, the capability information reported by the terminal includes a plurality of time durations.

Within the time duration during which the terminal can ensure the power consistency and/or the phase continuity, the terminal supports joint channel estimation for the uplink channel in the NTN, for example, supports DMRS bundling. Optionally, the unit of the time duration is a slot, a millisecond, or the like. For example, the capability information reported by the terminal includes a first time duration and a second time duration, the first time duration indicates that the terminal may ensure the phase continuity within 5 slots during a first system frame after the terminal accesses the system, and the first time duration indicates that the terminal may ensure the phase continuity within 10 slots during a second system frame. When there are a plurality of time durations, the capability information may also include an applied time range of each time duration.

Optionally, the terminal may also report a plurality pieces of capability information, and the network device may receive the plurality pieces of capability information reported by the terminal. Further, each piece of the capability information corresponds to one or more time durations. The capability information indicates that the terminal maintains a power consistency and/or a phase continuity during each of the time durations. Optionally, each piece of the capability information includes information that can indicate one or more time durations, such as bits, code points, specific time duration information, or the like, by which the one or more time durations may be determined. For example, the network device may determine the one or more time durations corresponding to each piece of the capability information based on the information (bits, code points) for indicating the one or more time durations in the respective capability information reported by the terminal and predetermined information. The network device may directly determine the one or more time durations corresponding to each piece of the capability information based on the specific time duration information in the respective capability information reported by the terminal. In the case where the capability information corresponds to a plurality of time durations, each time duration is the same or different.

Optionally, the capability information reported by the terminal is reported with respect to the uplink channel. That is, the terminal reports the capability information separately for different uplink channels, and the capability information reported with respect to each uplink channel corresponds to one or more time durations. For example, the terminal reports first capability information and second capability information, the first capability information is reported with respect to PUSCH, and the second capability information is reported with respect to PUCCH.

Optionally, the capability information reported by the terminal is reported with respect to a repeat transmission type of the uplink channel and/or a transmission manner of the uplink channel.

For example, the capability information reported by the terminal is reported with respect to the repeat transmission type of the uplink channel. That is, the terminal reports the capability information separately with respect to different repeat transmission types of the same uplink channel or different repeat transmission types of different uplink channels, and the capability information reported with respect to each repeat transmission type corresponds to one or more durations.

For example, the capability information reported by the terminal is reported with respect to the transmission manner of the uplink channel. That is, the terminal reports the capability information separately with respect to different transmission manners of the same uplink channel or different transmission manners of different uplink channels, and the capability information reported with respect to each transmission manner corresponds to one or more time durations.

For example, the capability information reported by the terminal is reported with respect to the repeat transmission type of the uplink channel and the transmission manner of the uplink channel. That is, for the same uplink channel, the terminal reports the capability information according to the two aspects of the repeat transmission type and the transmission manner. Moreover, the terminal may report the capability information for different uplink channels in the manner described above. Further, for each combination of the repeat transmission type and the transmission manner, the capability information reported by the terminal corresponds to one or more time durations.

After receiving the above-described capability information, the network device may carry out joint channel estimation for the uplink channel within the time duration reported by the terminal, thereby improving the accuracy of the channel estimation of the uplink channel.

In view of the above, in the method provided by the embodiment, by reporting, by the terminal, the capability of joint channel estimation for the uplink channel in the NTN, the uplink joint channel estimation in the NTN system may be achieved, and the uplink channel coverage in the NTN system may be improved.

FIG. 5 illustrates a flowchart of a method for reporting capability information according to an embodiment of the present disclosure. The method may be applied to the system as shown in FIGS. 1 or 2. The method includes:

step 502, reporting, by a terminal, the capability information to a network device, the capability information indicating a capability of joint channel estimation for an uplink channel in NTN.

The terminal belongs to an NTN system, and the terminal can report the capability information to the network device in the NTN system. The terminal and the network device in the NTN system may be referred to the examples in FIGS. 1 and 2. The capability of joint channel estimation for the uplink channel in the NTN includes a capability of the terminal for maintaining a power consistency and a phase continuity to support joint channel estimation or DMRS binding for the uplink channel in the NTN. The phase continuity may also be referred to as a phase consistency.

Optionally, the terminal reports the capability information by a combination of one or more of the following manners:

(1) reporting the capability information according to a reporting cycle;
(2) reporting the capability information when the terminal satisfies a reporting condition; or
(3) reporting the capability information when the terminal completes random access and reports a terminal capability.

In the above manner (1), the terminal reports the capability information with a fixed cycle, i.e., the terminal reports the capability information every a certain time period. In the above manner (2), the terminal triggers reporting the capability information under a specific situation, i.e., the terminal reports the capability information only when a pre-agreed situation occurs.

It is to be noted that the above manners can be freely combined or used individually. For example, the terminal may report the capability information according to the reporting cycle, and/or report the capability information when the terminal satisfies the reporting condition. The terminal may also report the capability information when the terminal completes the random access and reports the terminal capability, and/or report the capability information when the terminal satisfies the reporting condition.

Optionally, the capability information reported by the terminal indicates that the terminal maintains the power consistency and/or the phase continuity during one or more time durations. The capability information includes information that can indicate the above one or more time durations, such as bits, code points, specific time duration information, or the like, by which the above one or more time durations may be determined. For example, the network device may determine the above one or more time durations based on the information (bits, code points) for indicating the one or more time durations reported by the terminal and predetermined information. The network device may directly determine the above one or more time durations based on the specific time duration information reported by the terminal. In the case where the capability information corresponds to a plurality of time durations, each time duration is the same or different. For example, when the terminal reports the capability information according to the reporting cycle, the capability information reported each time includes the plurality of time durations. When the terminal satisfies the reporting condition, the capability information reported by the terminal includes the plurality of time durations. When the terminal completes the random access and reports the terminal capability, the capability information reported by the terminal includes a plurality of time durations.

Within the time duration during which the terminal can ensure the power consistency and/or the phase continuity, the terminal supports joint channel estimation for the uplink channel in the NTN, for example, supports DMRS bundling. Optionally, the unit of the time duration is a slot, a millisecond, or the like. For example, the capability information reported by the terminal includes a first time duration and a second time duration, the first time duration indicates that the terminal may ensure the phase continuity within 5 slots during a first system frame after the terminal accesses the system, and the first time duration indicates that the terminal may ensure the phase continuity within 10 slots during a second system frame. When there are a plurality of time durations, the capability information may also include an applied time range of each time duration.

Optionally, the reporting condition includes at least one of:

- the terminal obtaining a system information block (SIB)-NTN;
- the terminal obtaining an uplink resource; or
- GNSS updating.

The SIB-NTN carries the uplink synchronization auxiliary information, for example, the SIB-NTN refers to SIB#19. Since in some cases, for example, when an implicit uplink synchronization auxiliary information is used to bring into effect a moment indication, the network device may not know when the terminal obtains the SIB-NTN, and thus the network device may not pre-allocate an available uplink resource to the terminal to report the capability information described above, so the terminal may report a request to obtain the uplink resource, i.e., the above uplink resource is requested by the terminal from the network device in the NTN. Optionally, the request refers to a scheduling request. Similarly, the network device may not know the GNSS update of the terminal, and the terminal may also report a request to obtain the uplink resource. In order to reduce capability reporting due to frequent GNSS updates, the capability reporting may be triggered when determining that the GNSS change exceeds a certain threshold.

In some cases, for example, when an explicit uplink synchronization auxiliary information is used to bring into effect the moment indication, the network device may know when the terminal obtains the SIB-NTN, and thus the network device may pre-allocate the available uplink resource to the terminal to report the capability information described above. That is, when a predefined situation occurs, the terminal device uses a pre-configured specific resource to report the capability.

Optionally, the uplink synchronization auxiliary information includes at least one of:

- satellite ephemeris information; or
- common timing advance (TA) parameter information.

Optionally, the terminal may also report a plurality pieces of capability information when reporting the capability information in the above manner. Further, each piece of the capability information corresponds to one or more time durations. The capability information indicates that the terminal maintains a power consistency and/or a phase continuity during each of the time durations. Optionally, each piece of the capability information includes information that can indicate one or more time durations, such as bits, code points, specific time duration information, or the like, by which the one or more time durations may be determined. For example, the network device may determine the one or more time durations corresponding to each piece of the capability information based on the information (bits, code points) for indicating the one or more time durations in the respective capability information reported by the terminal and predetermined information. The network device may directly determine the one or more time durations corresponding to each piece of the capability information based on the specific time duration information in the respective capability information reported by the terminal. In the case where the capability information corresponds to a plurality of time durations, each time duration is the same or different.

Optionally, the capability information reported by the terminal is reported with respect to the uplink channel. That is, the terminal reports the capability information separately for different uplink channels, and the capability information reported with respect to each uplink channel corresponds to one or more time durations. For example, the terminal reports first capability information and second capability information, the first capability information is reported with respect to PUSCH, and the second capability information is reported with respect to PUCCH.

Optionally, the capability information reported by the terminal is reported with respect to a repeat transmission type of the uplink channel and/or a transmission manner of the uplink channel.

For example, the capability information reported by the terminal is reported with respect to the repeat transmission type of the uplink channel. That is, the terminal reports the capability information separately with respect to different repeat transmission types of the same uplink channel or different repeat transmission types of different uplink channels, and the capability information reported with respect to each repeat transmission type corresponds to one or more durations.

For example, the capability information reported by the terminal is reported with respect to the transmission manner of the uplink channel. That is, the terminal reports the capability information separately with respect to different transmission manners of the same uplink channel or different transmission manners of different uplink channels, and the capability information reported with respect to each transmission manner corresponds to one or more time durations.

For example, the capability information reported by the terminal is reported with respect to the repeat transmission type of the uplink channel and the transmission manner of the uplink channel. That is, for the same uplink channel, the terminal reports the capability information according to the two aspects of the repeat transmission type and the transmission manner. Moreover, the terminal may report the capability information for different uplink channels in the manner described above. Further, for each combination of the repeat transmission type and the transmission manner, the capability information reported by the terminal corresponds to one or more time durations.

For example, the terminal reports first capability information and second capability information, in which the first capability information is reported with respect to PUSCH repetition Type A and the second capability information is reported with respect to PUSCH repetition Type B. Further, the capability information reported by the terminal with respect to each repeat transmission type may include one or more durations.

It is to be noted that the above scheme of different triggering manners for the terminal to report the capability information may be used in combination with the scheme of the terminal reporting the capability information with respect to the uplink channel. For example, the terminal periodically reports the capability information, and the capability information is reported separately with respect to different uplink channels. The terminal reports the capability information when the reporting condition is satisfied, and the capability information is reported with respect to different repeat transmission types of each uplink channel.

In view of the above, in the method provided by the embodiment, by reporting, by the terminal, the capability of joint channel estimation for the uplink channel in the NTN, the uplink joint channel estimation in the NTN system may be achieved, and the uplink channel coverage in the NTN system may be improved.

It is to be noted that the sequence of the method steps provided by the embodiment of the present disclosure may be appropriately adjusted, and the steps may be correspondingly increased or decreased according to the situation. Any person skilled in the art may easily conceive of a modification method within the technical scope disclosed by the present disclosure, which shall fall within the protection scope of the present disclosure, and therefore will not be further repeated herein.

FIG. 6 is a structural block diagram of a device for reporting capability information according to an exemplary embodiment of the present disclosure. As shown in FIG. 6, the device includes:

a transmitting module 601, configured to report the capability information, the capability information indicating a capability of joint channel estimation for an uplink channel in NTN.

In an optional design, the transmitting module 601 is configured to report the capability information by a combination of one or more of the following manners:

reporting the capability information according to a reporting cycle;
reporting the capability information when the device satisfies a reporting condition; or
reporting the capability information when the device completes random access and reports a device capability.

In an optional design, the capability information indicates that the device maintains a power consistency and/or a phase continuity during one or more time durations.

In an optional design, he reporting condition includes at least one of:

the device obtaining SIB-NTN;
the device obtaining an uplink resource; or
GNSS updating,
wherein the SIB-NTN carries uplink synchronization auxiliary information, and the uplink resource is requested by the device from a network device in the NTN.

In an optional design, the uplink synchronization auxiliary information includes at least one of:

satellite ephemeris information; or
common TA parameter information.

In an optional design, the transmitting module 601 is configured to:

report a plurality pieces of the capability information,
wherein each piece of the capability information corresponds to one or more time durations, and the capability information indicates that the device maintains a power consistency and/or a phase continuity during each of the time durations.

In an optional design, the capability information is reported with respect to the uplink channel.

In an optional design, the capability information is reported with respect to a repeat transmission type of the uplink channel and/or a transmission manner of the uplink channel.

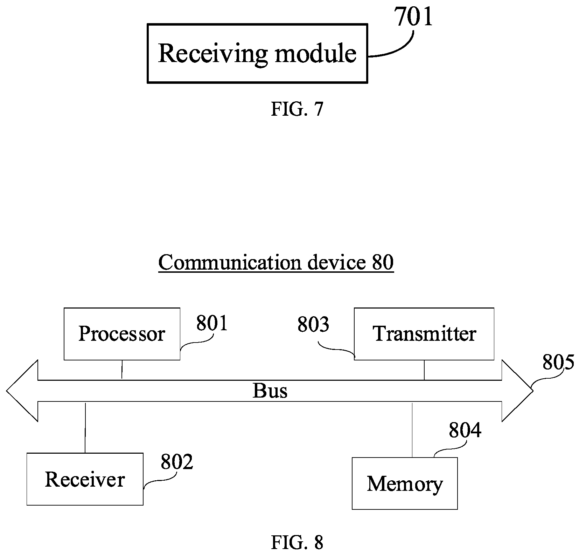

FIG. 7 illustrates a structural block diagram of a device for reporting capability information according to an exemplary embodiment of the present disclosure. As shown in FIG. 7, the device includes:

a receiving module 701, configured to receive the capability information reported by a terminal, the capability information indicating a capability of joint channel estimation for an uplink channel in NTN.

In an optional design, the capability information indicates that the terminal maintains a power consistency and/or a phase continuity during one or more time durations.

In an optional design, the receiving module 701 is configured to:

receive a plurality pieces of the capability information reported by the terminal,

wherein each piece of the capability information corresponds to one or more time durations, and the capability information indicates that the terminal maintains a power consistency and/or a phase continuity during each of the time durations.

In an optional design, the capability information is reported with respect to the uplink channel.

In an optional design, the capability information is reported with respect to a repeat transmission type of the uplink channel and/or a transmission manner of the uplink channel.

It is to be noted that for the implementation of the function of the device provided in the above embodiment, the division of the above respective function modules is illustrated as an example, and in an actual application, the above-described function may be assigned to be completed by different functional modules as needed, i.e., the internal structure of the device may be divided into different functional modules in order to complete all or part of the above-described function.

As for the device in the above embodiment, the specific manners in which the respective modules thereof perform operations have been described in detail in the related method embodiments, which will not be repeated herein.

FIG. 8 illustrates a schematic structure diagram of a communication device according to an exemplary embodiment of the present disclosure, and the communication device 80 includes a processor 801, a receiver 802, a transmitter 803, a memory 804, and a bus 805.

The processor 801 includes one or more processing cores, and the processor 801 performs various functional applications and information processing by running software programs and modules.

The receiver 802 and the transmitter 803 may be implemented as one communication component, which may be a communication chip.

The memory 804 is connected to the processor 801 via the bus 805.

The memory 804 may be used to store at least one instruction, and the processor 801 is used to execute the at least one instruction to implement the various steps in the method embodiment described above.

In addition, the memory 804 may be implemented by any type of volatile or non-volatile storage devices or a combination thereof, and the volatile or non-volatile storage device includes, but is not limited to: a magnetic or optical disc, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

When the communication device is realized as a terminal, a processor and a transceiver in the communication device involved in the embodiments of the present disclosure may be implemented together as a communication chip, or the transceiver may form a communication chip alone. A transmitter in the transceiver performs a transmitting step performed by the terminal in any of the methods shown above, a receiver in the transceiver performs a receiving step performed by the terminal in any of the methods shown above, and the processor performs steps other than the transmitting and receiving steps, which will not be described herein.

When the communication device is realized as a network device, a processor and a transceiver in the communication device involved in the embodiments of the present disclosure may be implemented together as a communication chip, or the transceiver may form a communication chip alone. A transmitter in the transceiver performs a transmitting step performed by the network device in any of the methods shown above, a receiver in the transceiver performs a receiving step performed by the network device in any of the methods shown above, and the processor performs steps other than the transmitting and receiving steps, which will not be described herein.

In an exemplary embodiment, there is also provided a computer-readable storage medium having stored therein at least one instruction, at least one program, a code set or an instruction set, which is loaded and executed by a processor to implement the method for reporting capability information according to each method embodiment.

In an exemplary embodiment, there is also provided a chip including a programmable logic circuit and/or a program instruction, and the chip runs on a communication device to implement the method for reporting capability information according to each method embodiment.

In an exemplary embodiment, there is also provided a computer program product that, when running on a processor of a computer device, causes the computer device to perform the method for reporting capability information described above.

A person skilled in the art may appreciate that in one or more of the above examples, the functions described in the embodiments of the present disclosure may be implemented using hardware, software, firmware, or any combination thereof. When being implemented using software, the functions may be stored in a computer-readable medium or transmitted as one or more instructions or codes on the computer-readable medium. The computer-readable media includes computer storage media and communication media, in which the communication media include any medium that facilitates the transmission of a computer program from one location to another, and the storage medium may be any available medium to which a general purpose or special purpose computer can access.

The above mentioned are only exemplary embodiments of the present disclosure, and are not intended to limit the present disclosure, and any modifications, equivalent replacements, improvements, etc. made within the spirit and principle of the present disclosure shall be included in the protection scope of the present disclosure.

**Claims**

1. A method for reporting capability information performed by a terminal, comprising:
   reporting the capability information, the capability information indicating a capability of joint channel estimation for an uplink channel in a non-terrestrial network, NTN.

2. The method according to claim 1, wherein reporting the capability information comprises reporting the capability information by a combination of one or more of the following manners:

   reporting the capability information according to a reporting cycle;
   reporting the capability information when the terminal satisfies a reporting condition; or
   reporting the capability information when the terminal completes random access and reports a terminal capability.

3. The method according to claim 2, wherein the capability information indicates that the terminal maintains a power consistency and/or a phase continuity during one or more time durations.

4. The method according to claim 2, wherein the reporting condition comprises at least one of:

   the terminal obtaining a system information block, SIB, -NTN;
   the terminal obtaining an uplink resource; or
   a global navigation satellite system, GNSS, updating,
   wherein the SIB-NTN carries uplink synchronization auxiliary information, and the uplink resource is requested by the terminal from a network device in the NTN.

5. The method according to claim 4, wherein the uplink synchronization auxiliary information comprises at least one of:

   satellite ephemeris information; or
   common timing advance, TA, parameter information.

6. The method according to any one of claims 1 to 5, wherein reporting the capability information comprises:

   reporting a plurality pieces of the capability information,
   wherein each piece of the capability information corresponds to one or more time durations, and the capability information indicates that the terminal maintains a power consistency and/or a phase continuity during each of the time durations.

7. The method according to claim 6, wherein the capability information is reported with respect to the uplink channel.

8. The method according to claim 7, wherein the capability information is reported with respect to a repeat transmission type of the uplink channel and/or a transmission manner of the uplink channel.

9. A method for reporting capability information performed by a network device, comprising:
   receiving the capability information reported by a terminal, the capability information indicating a capability of joint channel estimation for an uplink channel in NTN.

10. The method according to claim 9, wherein the capability information indicates that the terminal maintains a power consistency and/or a phase continuity during one or more time durations.

11. The method according to claim 9 or 10, wherein receiving the capability information reported by the terminal comprises:

receiving a plurality pieces of the capability information reported by the terminal,

wherein each piece of the capability information corresponds to one or more time durations, and the capability information indicates that the terminal maintains a power consistency and/or a phase continuity during each of the time durations.

12. The method according to claim 11, wherein the capability information is reported with respect to the uplink channel.

13. The method according to claim 16, wherein the capability information is reported with respect to a repeat transmission type of the uplink channel and/or a transmission manner of the uplink channel.

14. A device for reporting capability information, comprising:
a transmitting module, configured to report the capability information, the capability information indicating a capability of joint channel estimation for an uplink channel in NTN.

15. A device for reporting capability information, comprising:
a receiving module, configured to receive the capability information reported by a terminal, the capability information indicating a capability of joint channel estimation for an uplink channel in NTN.

16. A terminal, comprising:

a processor;
a transceiver connected to the processor; and
a memory having executable instructions of the processor stored thereon,
wherein the processor is configured to load and execute the executable instructions to implement the method for reporting capability information according to any one of claims 1 to 8.

17. A network device, comprising:

a processor;
a transceiver connected to the processor; and
a memory having executable instructions of the processor stored thereon,
wherein the processor is configured to load and execute the executable instructions to implement the method for reporting capability information according to any one of claims 9 to 13.

18. A computer-readable storage medium having executable instructions stored thereon that, when being loaded and executed by a processor, implement the method for reporting capability information according to any one of claims 1 to 13.

19. A chip comprising a programmable logic circuit or program, wherein the chip is configured to implement the method for reporting capability information according to any one of claims 1 to 13.

FIG. 1

FIG. 2

302

| Reporting capability information which indicates capability of joint channel estimation for uplink channel in NTN |
|---|

FIG. 3

402

| Receiving capability information reported by terminal, the capability information indicating capability of joint channel estimation for uplink channel in NTN |
|---|

FIG. 4

| Terminal | | Network device |
|---|---|---|

502.Reporting capability information which indicates capability of joint channel estimation for uplink channel in NTN

FIG. 5

601

| Transmitting module |
|---|

FIG. 6

701

Receiving module

FIG. 7

Communication device 80

| Processor | 801 | 803 | Transmitter |

Bus  805

| Receiver | 802 | | 804  Memory |

FIG. 8

**EP 4 598 177 A1**

### INTERNATIONAL SEARCH REPORT

| International application No. |
|---|
| **PCT/CN2022/123454** |

| A. | CLASSIFICATION OF SUBJECT MATTER |
|---|---|

H04W 72/04(2009.01)i

According to International Patent Classification (IPC) or to both national classification and IPC

| B. | FIELDS SEARCHED |
|---|---|

Minimum documentation searched (classification system followed by classification symbols)

H04W H04L

Documentation searched other than minimum documentation to the extent that such documents are included in the fields searched

Electronic data base consulted during the international search (name of data base and, where practicable, search terms used)

CNTXT, ENTXTC, ENTXT, VCN, VEN, CJFD, 3GPP: 非地面通信网络/NTN/卫星/基站, 联合信道估计, 解调参考信号/ DMRS, 绑定/捆绑, 发送/传输, 重复/周期, 上行信道/物理上行共享信道, 上报/报告/上传, 能力, 条件, Non-Terrestrial Network, joint channel estimation, demodulation reference signal, bundling, repetition/cycle, up, report, ability/capacity, condition

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111357235 A (QUALCOMM INC.) 30 June 2020 (2020-06-30) claims 9-20, and description, paragraphs [0090]-[0145] | 1-3, 9, 10, 14-19 |
| A | WO 2020030254 A1 (HUAWEI TECHNOLOGIES CO., LTD.) 13 February 2020 (2020-02-13) entire document | 1-19 |
| A | CN 114826505 A (DATANG MOBILE COMMUNICATIONS EQUIPMENT CO., LTD.) 29 July 2022 (2022-07-29) entire document | 1-19 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 December 2022** | **26 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/123454**

| Patent document cited in search report | | | Publication date (day/month/year) | Patent family member(s) | | | Publication date (day/month/year) |
|---|---|---|---|---|---|---|---|
| CN | 111357235 | A | 30 June 2020 | EP | 3711243 | A1 | 23 September 2020 |
| | | | | US | 2019159181 | A1 | 23 May 2019 |
| | | | | WO | 2019099517 | A1 | 23 May 2019 |
| WO | 2020030254 | A1 | 13 February 2020 | None | | | |
| CN | 114826505 | A | 29 July 2022 | None | | | |

Form PCT/ISA/210 (patent family annex) (January 2015)